# EUROPÄISCHE PATENTSCHRIFT

(11) **EP 0 394 673 B1**
(45) Veröffentlichungstag und Bekanntmachung des Hinweises auf die Patenterteilung: **15.09.1993**
(21) Anmeldenummer: 90105442.9
(22) Anmeldetag: 22.03.1990
(51) Int. Cl.: F17C 13/04, F16K 1/30

(54) **Sicherheitsvorrichtung für einen Druckgasbehälter**
Safety device for a pressurised gas container
Dispositif de sécurité pour conteneur de gaz sous pression

(30) Priorität: 17.04.1989 DE 8904831 U
(43) Veröffentlichungstag der Anmeldung: 31.10.1990
(73) Patentinhaber: HI-TEC-GAS INTERNATIONAL GMBH, D-48565 Steinfurt (DE)
(72) Erfinder: Sonntag, Bruno, D-4435 Horstmar (DE)
(74) Vertreter: Glawe, Delfs, Moll & Partner

(56) Entgegenhaltungen:
- DE-U- 8 813 050
- US-A- 3 709 255
- US-A- 4 456 029

## Beschreibung

Die Erfindung betrifft eine Sicherheitsvorrichtung für einen Druckbehälter, die ein Sicherheitsventil mit einem von dem ausströmenden Gas gegen eine nachgiebige Kraft auf einen Ventilsitz gedrängten Ventilkörper und ein Überdruckventil aufweist.

Mit dem wachsenden Gebrauch technischer Gase, die in Druckbehältern zur Verfügung gestellt werden, wächst die Gefahr, daß solche Gase infolge eines Unfalls oder unsachgemäßer Bedienung ungehemmt ausströmen. Wenn beispielsweise die Ventilarmatur einer umfallenden Gasflasche abbricht oder wenn ein Druckminderventil zur Erreichung größerer Ausströmleistung vorschriftswidrig entfernt wird oder wenn eine Flüssiggasflasche, die nur in aufrechter Stellung benutzt werden soll, gelegt wird, um zwecks größerer Brennleistung das Ausströmen des Gases im flüssigen Zustand zu erreichen, treten große Gefahren auf, die bei der bisher üblichen Ausrüstung der Behälter nur teilweise eingedämmt werden können.

Eine vorbekannte Sicherheitsvorrichtung (US-A-4 635 680) weist ein Sicherheitsventil mit einer von dem ausströmenden Gas gegen die Schwerkraft auf einen Ventilsitz gedrängten Kugel auf. Die Anordnung ist dabei so bemessen, daß das Sicherheitsventil schließt, sobald die Ausströmgeschwindigkeit eine vorbestimmt maximale Ausströmgeschwindigkeit überschreitet.

Sicherheitsventile, die auf dem auf einen Ventilkörper einwirkenden Antagonismus einer nachgiebigen Kraft (der Schwerkraft bei der vorbekannten Vorrichtung) und der Strömungskraft (Staudruck, Reibung, statische oder dynamische Druckdifferenz) beruhen, sind als Rückschlagventile bekannt. Bei Konstruktion und Bemessung des Sicherheitsventils kann daher auf die Erfahrungen mit Rückschlagventilen zurückgegriffen werden.

Die vorbekannte Sicherheitsvorrichtung ist also verhältnismäßig leicht herzustellen. Sie weist auch ein Überdruckventil auf. Der Nachteil besteht aber darin, daß (wegen des Überdruckventils) die Sicherheitsvorrichtung außen an der Flasche angebracht werden muß. Diese Sicherheitsvorrichtung kann daher leicht abbrechen, wenn die Gasflasche umfällt.

Die Aufgabe der Erfindung besteht in der Schaffung einer Sicherheitsvorrichtung, die auch beim Abbrechen von außen angeordneten Armaturen ihre Funktion behält.

Die erfindungsgemäße Lösung zeichnet sich dadurch aus, daß *das* *Sicherheitsventil an einer bei Verbindung der Sicherheitsvorrichtung mit einem Druckbehälter innerhalb des Druckbehälters gelegenen Stelle angeordnet ist und daß* der Ventilsitz des Sicherheitsventils mit dem Ventilkörper des Überdruckventils verbunden ist, der durch Federkraft gegen einen Ventilsitz des Überdruckventils gedrängt ist.

Diese Kombination des bekannten Sicherheitsventils mit dem Überdruckventil ermöglicht es, diese *Organe* im Inneren des Druckbehälters anzuordnen. Genauer gesagt, *sind sie* innerhalb der Außenflächen der stabilen Behälterteile einschließlich seiner Anschlußnippel etc. angeordnet. Sie kann mit dem Einschraubstutzen eines außerhalb des Behälters befindlichen Stell- und/oder Druckminderventils fest verbunden sein. Sollte das Stell- und/oder Druckminderventil beschädigt oder gar abgebrochen werden, so wird in der Regel der Einschraubstutzen in dem Schraubnippel des Druckbehälters erhalten bleiben; ebenfalls erhalten bleibt dann auch die innerhalb des Behälters an dem Einschraubstutzen befestigte Sicherheitsvorrichtung, so daß deren Funktion durch eine solche außerhalb des Behälters stattfindende Beschädigung nicht beeinträchtigt wird.

Die *erfindungsgemäße* Sicherheitsvorrichtung kann ohne Konstruktionsänderung in jedes handelsübliche Gasentnahmeventil *eingebaut werden*. Sie kann aber auch völlig losgelöst von dem Entnahmeventil z.B. im Gewinde der Gasflasche angebracht werden. Eine kostengünstige und effektive Nachrüstung wird somit ohne Konstruktionsänderung der Entnahmeventile gewährleistet. Trotzdem wird ein umfassender Unfallschutz erreicht, was sehr wichtig ist, wenn man an die unzähligen Gasflaschen, die teilweise in Deichselkästen bei Wohnmobilen und Wohnwagen mitgeführt werden, denkt. Bei Lastkraftfahrzeugen werden ebenfalls ungeschützte Gasflaschen unter der Ladefläche oder hinter dem Führerhaus mitgeführt, die während der Fahrt an Heizanlagen und Wasserwärmern angeschlossen sind. Die Ventile und Druckminderer sind nicht geschützt, so daß ein Verkehrsunfall zu*m* Bruch des Entnahmeventils mit unübersehbaren Folgen führen kann.

Im allgemeinen ist es zweckmäßig, die Strömungskräfte im Sicherheitsventil unmittelbar auf den Ventilkörper einwirken zu lassen. Jedoch schließt die Erfindung solche Ausführungen nicht aus, bei denen die Strömung auf einen besonderen, mit dem Ventilkörper verbundenen Körper einwirkt.

An der Bildung der nachgiebigen Kraft kann eine Feder beteiligt sein. Dies gilt insbesondere dann, wenn die Funktion des Sicherheitsventils ganz oder teilweise unabhängig von der Stellung des Behälters sein soll. Statt dessen oder zusätzlich kann an der Bildung der nachgiebigen Kraft die Schwerkraft beteiligt sein. Dies ist insbesondere dann zweckmäßig, wenn das Sicherheitsventil auch auf die Stellung des Behälters ansprechen soll. Bei ordnungsgemäßer Stellung des Behälters, insbesondere bei aufrechter Stellung eines Flüssiggasbehälters, soll die nachgiebige Kraft und damit die Grenzkraft, bei welcher das Sicherheitsventil anspricht, am größten sein. Wenn der Behälter gelegt ist, so daß sich die Ausströmöffnung des Behälters unterhalb des Niveaus des flüssigen Anteils des Gases befinden kann, soll das Sicherheitsventil bereits bei sehr geringer Ausströmgeschwindigkeit ansprechen. In Zwischenstellungen kann die nachgiebige Kraft für eine Gasentnahme noch ausreichen, wobei aber durch ihre Verminderung entsprechend dem Cosinus des Neigungswinkels die Ansprechschwelle herabgesetzt ist.

Der Ventilkörper bzw. der Teil des Ventilkörpers, der mit der Gasströmung zusammenwirkt, kann eine beliebige, geeignete Form haben, wobei alle im Stand der Technik vorhandenen Erfahrungen mit Rückschlagventilen berücksichtigt werden können. Besonders vorteilhaft ist die Ausbildung des Ventilkörpers als Kugel in einem langgestreckten Strömungsweg, der beispielsweise zylindrisch ist und dessen Querschnitt nicht wesentlich größer als der der Kugel ist. Ein zum Ventilsitz hin sich verengender Strömungsweg kann zweckmäßig sein, um ein stabiles Verschlußverhalten des Ventilkörpers zu fördern.

Die erfindungsgemäße Sicherheitsvorrichtung ist insbesondere für diejenigen Fälle vorgesehen, in denen ein Stell- und/oder Druckminderventil vorgesehen ist. Die erfindungsgemäße Sicherheitsvorrichtung ist einem solchen Ventil stromauf vorgeschaltet.

Wenn nach dem Schließen der Sicherheitsventile ein stromab vom Sicherheitsventil befindliches Stellventil geschlossen wird, ist zwischen Sicherheitsventil und Stellventil ein Raum niederen Drucks eingeschlossen, so daß der Ventilkörper des Sicherheitsventils durch die statische Druckdifferenz zwischen diesem Raum und dem Innenraum des Behälters auf den Ventilsitz gepreßt bleibt. Dadurch wird die Wiederinbetreibnahme verhindert. Wenn dies unerwünscht ist, ist an dem Sicherheitsventil zweckmäßigerweise eine Lecköffnung vorgesehen, durch die der Ventilzwischenraum innerhalb einer angemessenen Zeitspanne von beispielsweise einigen Sekunden mit dem Behälterdruck aufgefüllt werden kann, so daß der Ventilkörper des Sicherheitsventils durch die nachgiebige Kraft in die inaktive Stellung zurückgedrückt werden kann. Nach Öffnen des Stellventils kann dann wieder Gas entnommen werden.

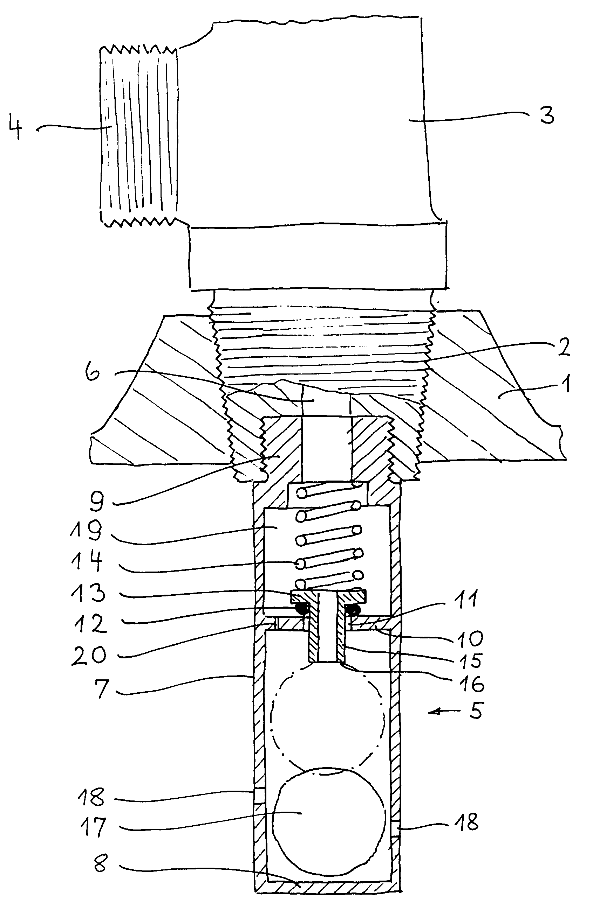

Die Erfindung wird im folgenden näher unter Bezugnahme auf die Zeichnung erläutert, die ein vorteilhaftes Ausführungsbeispiel in einem schematischen Längsschnitt veranschaulicht.

In das Schraubnippel 1 der ansonsten in der Zeichnung nicht gezeigten Gasflasche ist der Gewindestutzen 2 der Armatur 3 eingeschraubt, die ein herkömmliches Stellventil und einen Anschlußgewindestutzen 4 umfaßt. Stromaufwärts ist an den Stutzen 2 das erfindungsgemäße Sicherheitsventil 5 so angesetzt, daß die Bohrung 6 der Armatur 3 ausschließlich über das Sicherheitsventil 5 mit dem Innenraum 6 der Gasflasche in Verbindung steht.

Das Sicherheitsventil 5 hat ein im wesentlichen hohlzylindrisches Gehäuse 7, das am Ende bei 8 abgeschlossen ist und über einen Stutzen 9 mit dem Stutzen 2 der Armatur 3 dicht verbunden ist. Es enthält eine Zwischenwand 10 mit Bohrung 11, die einen Ventilsitz bildet, der über einen Dichtungsring 12 mit dem tellerförmigen Ventilkörper 13 zusammenwirkt, der über eine Druckfeder 14 gegen den Ventilsitz 10 gepreßt wird. Die Teile 10 bis 14 bilden das oben erwähnte Überdruckventil.

Der Ventilteller 13 läuft in ein Rohr 15 aus, das mit Umfangsspiel in der Bohrung 11 sitzt und in einer Stirnfläche 16 endet, die als Ventilsitz mit der einen Ventilkörper bildenden Kugel 17 zusammenwirkt. Der Durchmesser der Kugel 17 ist ein wenig geringer als der Innendurchmesser des Gehäuses 7. Das Gehäuse 7 enthält einige Löcher 18, von denen wenigsten eines so angeordnet ist, daß das aus dem Flascheninnenraum 6 in das Innere des Gehäuses 7 strömende Gas einen die Kugel 17 gegen den Ventilsitz 16 drängen Einfluß ausübt. Diesem Einfluß wirkt die Schwerkraft der Kugel 17 bei der dargestellten, vertikalen Anordnung entgegen.

Die Funktionsweise wird wie folgt erläutert.

Wenn das Ventil der Armatur 3 geschlossen ist und daher kein Gas strömt, befindet sich die Kugel 17 in ihrer mit durchgezogener Linie gezeigten, unteren Stellung. Wenn das Ventil der Armatur 3 geöffnet wird und die Anordnung von dem Gas mit einer Geschwindigkeit durchströmt wird, die normalen Verhältnissen entspricht, überwiegt die auf die Kugel 17 wirkende Schwerkraft gegenüber der durch das strömende Gas auf die Kugel ausgeübten Kraft, so daß sie gleichfalls in ihrer unteren Stellung verharrt. Wenn jedoch die Strömungsgeschwindigkeit über einen vorbestimmten Wert ansteigt, der so gewählt ist, daß er mit hinreichender Wahrscheinlichkeit einer Betriebsstörung der Armatur 3 oder aus sonstigen Gründen unnormalem Betrieb zugeordnet werden muß, überwiegt die von der Strömung auf die Kugel 17 ausgeübte Kraft, so daß diese ansteigt und sich auf den Ventilsitz 16 setzt. Dadurch wird im allgemeinen der Strömungsweg gänzlich verschlossen. Stattdessen kann auch eine verbleibende Restöffnung vorgesehen sein, die bewirkt, daß der Gasstrom auf ein zulässiges Maß herabgesetzt wird.

Bei der Darstellung ist vorausgesetzt, daß die Gasflasche steht und ein etwa flüssiger Anteil des Flascheninhalts die Armatur nicht erreicht. Wenn die Flasche diese vorgeschriebene Stellung nicht hat, ist das Gehäuse 7 geneigt, so daß nur eine entsprechend geringere Komponente der Schwerkraft entgegen der Strömungskraft auf die Kugel 17 wirkt. Bei horizontal liegender Flasche wird der Schwerkrafteinfluß auf die Kugel 17 Null, so daß schon die geringste Strömung den Verschluß des Sicherheitsventils herbeiführt. Das gilt insbesondere auch dann, wenn Flüssigkeit auszuströmen droht.

Wünscht man, daß dem Behälter in jeder beliebigen Stellung Gas entnommen werden kann, setzt man als nachgiebige Kraft im Sicherheitsventil statt der Schwerkraft eine Feder ein.

Wenn das Sicherheitsventil 16, 17 geschlossen ist, während die Armatur 3 geöffnet ist, stellt sich in dem Raum 19 Atmosphärendruck ein, so daß das Sicherheitsventil aufgrund des statischen Druckunterschieds zwischen den Räumen 6 und 19 geschlossen gehalten wird. Damit nach dem Schließen der Armatur 3 Druckausgleich und Öffnung des Sicherheitsventils stattfinden kann, ist dieses nicht völlig dicht ausgeführt, so daß nach einer gewünschten Zeitspanne Druckausgleich eintritt und die Kugel 17 abfallen kann. Diese Undichtigkeit ist in der Zeichnung als Drosselbohrung 20 angedeutet. Es versteht sich aber, daß die Undichtigkeit auch auf andere Weise hergestellt sein kann, beispielsweise durch Rauhigkeit der Kugel 17 oder des Ventilsitzes 16 oder durch Verwendung eines durchlässigen Schraubgewindes, wenn die den Ventilsitz 11 bildende Zwischenwand als gesondertes Teil hergestellt und durch ein Gewinde im Gehäuse 7 gehalten ist.

Die Armatur 3 kann ein Überdruckventil enthalten, um eine Entspannung des Behälterinhalts zu erreichen, wenn der Druck darin gefährlich ansteigen sollte. Damit die Funktion dieses Überdruckventils nicht durch das geschlossene Sicherheitsventil unmöglich gemacht werden kann, ist innerhalb der erfindungsgemäßen Sicherheitsvorrichtung das Überdruckventil 10 bis 14 vorgesehen, dessen Feder so bemessen ist, daß das Überdruckventil bei einem vorbestimmten Überdruck im Raum 6 sich öffnet und Gas außerhalb des Rohrs 15 durch die Bohrung 11 entweichen kann.

## Patentansprüche

1. Sicherheitsvorrichtung für einen Druckbehälter (1), die ein Sicherheitsventil (16, 17) mit einem von dem ausströmenden Gas gegen eine nachgiebige Kraft auf einen Ventilsitz (16) gedrängten Ventilkörper (17) und ein Überdruckventil (10 bis 14) aufweist, dadurch gekennzeichnet, daß *das Sicherheitsventil an einer bei Verbindung der Sicherheitsvorrichtung mit einem Druckbehälter innerhalb des Druckbehälters gelegenen Stelle angeordnet ist und daß* der Ventilsitz (16) des Sicherheitsventils (16, 17) mit dem Ventilkörper (13) des Überdruckventils (10 bis 14) verbunden ist, der durch Federkraft (14) gegen einen Ventilsitz (10) des Überdruckventils gedrängt ist.

2. Sicherheitsvorrichtung nach Anspruch 1, dadurch gekennzeichnet, daß an der Bildung der nachgiebigen Kraft eine Feder beteiligt ist.

3. Sicherheitsvorrichtung nach Anspruch 1 oder 2, dadurch gekennzeichnet, daß an der Bildung der nachgiebigen Kraft die Schwerkraft in solcher Weiser beteiligt ist, daß die nachgiebige Kraft bei nicht ordnungsgemäßer Stellung des Behälters vermindert ist.

4. Sicherheitsvorrichtung nach einem der Ansprüche 1 bis 3, dadurch gekennzeichnet, daß der Ventilkörper von einer Kugel (17) in einem Strömungsweg gebildet ist, dessen Querschnitt nicht wesentlich größer als der der Kugel ist.

5. Sicherheitsvorrichtung nach einem der Ansprüche 1 bis 4, dadurch gekennzeichnet, daß sie einem Stell- und/oder Druckminderventil (3) stromauf vorgeschaltet ist.

6. Sicherheitsvorrichtung nach Anspruch 5, dadurch gekennzeichnet, daß sie mit einem Einschraubstutzen (2) des Stell- und/oder Druckminderventils (3) fest verbunden ist.

7. Sicherheitsvorrichtung nach einem der Ansprüche 1 bis 6, dadurch gekennzeichnet daß das Sicherheitsventil (16, 17) eine Lecköffnung (20) aufweist.

8. Sicherheitsvorrichtung nach einem der Ansprüche 1 bis 7, dadurch gekennzeichnet, daß dem Sicherheitsventil (16, 17) ein Überdruckventil (10 bis 14) parallelgeschaltet ist, das unterhalb eines vorbestimmten Drucks geschlossen ist.

## Claims

1. A safety device for a pressure vessel (1), which has a safety valve (16, 17) with a valve body (17), which is urged by the outflowing gas against an elastic force on to a valve seat (16), and a relief valve (10 to 14), characterised in that, when the safety device is connected to a pressure vessel, the safety valve is situated at a location lying within the pressure vessel and in that the valve seat (16) of the safety valve (16, 17) is connected with the valve body (13) of the relief valve (10 to 14), which valve body is urged by the force of a spring (14) against a valve seat (10) of the relief valve.

2. A safety device according to Claim 1, characterised in that a spring participates in producing the elastic force.

3. A safety device according to Claim 1 or 2, characterised in that the force of gravity participates in producing the elastic force in such a way that the elastic force is reduced if the vessel is not properly positioned.

4. A safety device according to any one of Claims 1 to 3, characterised in that the valve body is formed by a ball (17) in a flow path, the cross-section of which is not substantially larger than that of the ball.

5. A safety device according to any one of Claims 1 to 4, characterised in that it is connected upstream of a control valve and/or pressure-reducing valve (3).

6. A safety device according to Claim 5, characterised in that it is securely connected with a threaded socket (2) of the control valve and/or pressure-reducing valve (3).

7. A safety device according to any one of Claims 1 to 6, characterised in that the safety valve (16, 17) has a leakage opening (20).

8. A safety device according to any one of Claims 1 to 7, characterised in that a relief valve (10 to 14), which is closed below a predetermined pressure, is connected in parallel with the safety valve (16, 17).

## Revendications

1. Dispositif de sécurité pour un récipient sous pression (1), comportant une soupape de sûreté (16, 17) avec un corps de soupape (17) qui est pressé, par le gaz qui s'échappe, sur un siège de soupape (16) contre une force antagoniste susceptible d'être vaincue, ainsi qu'une soupape de surpression (10 à 14), caractérisé en ce que la soupape de sûreté est disposée en un point qui, lorsque le dispositif de sécurité est raccordé à un récipient sous pression, est situé à l'intérieur du récipient sous pression, et en ce que le siège de soupape (16) de la soupape de sécurité (16, 17) est raccordé au corps de soupape (13) de la soupape de surpression (10 à 14), lequel est pressé par la force d'un ressort (14) contre un siège de soupape (10) de la soupape de surpression.

2. Dispositif de sécurité selon la revendication 1, caractérisé en ce qu'un ressort participe à la création de la force susceptible d'être vaincue.

3. Dispositif de sécurité selon la revendication 1 ou 2, caractérisé en ce que la pesanteur participe à la création de la force susceptible d'être vaincue, de telle sorte que la force susceptible d'être vaincue soit réduite lorsque le récipient n'est pas en position normale.

4. Dispositif de sérurité selon l'une quelconque des revendications 1 à 3, caractérisé en ce que le corps de soupape est constitué par une bille (17) dans un trajet d'écoulement dont la section n'est pas beaucoup plus grande que celle de la bille.

5. Dispositif de sécurité selon l'une quelconque des revendications 1 à 4, caractérisé en ce qu'il est intercalé en amont d'un robinet de réglage et/ou d'un manodétendeur (3).

6. Dispositif de sécurité selon la revendication 5, caractérisé en ce qu'il est fixé rigidement à un raccord de vissage (2) du robinet de réglage et/ou du manodétendeur (3).

7. Dispositif de sécurité selon l'une quelconque des revendications 1 à 6, caractérisé en ce que la soupape de sûreté (16, 17) présente un orifice de fuite (20).

8. Dispositif de sécurité selon l'une quelconque des revendications 1 à 7, caractérisé en ce qu'en parallèle sur la soupape de sûreté (16, 17) est montée une soupape de surpression (10 à 14) qui est fermée au-dessous d'une pression prédéterminée.
